# EUROPEAN PATENT SPECIFICATION

(11) **EP 2 066 171 B1**
(45) Date of publication and mention of the grant of the patent: **25.07.2012**
(21) Application number: 06799771.8
(22) Date of filing: 16.10.2006
(51) Int. Cl.: A01M 21/04

(54) **ADMINISTERING TREATMENT SUBSTANCE TO POROUS ELEMENTS**
VERABREICHUNG EINER BEHANDLUNGSSUBSTANZ AN PORÖSE ELEMENTE
ADMINISTRATION D'UNE SUBSTANCE DE TRAITEMENT À DES ÉLÉMENTS POREUX

(30) Priority: 25.09.2006 SE 0601986
(43) Date of publication of application: 10.06.2009
(73) Proprietor: Merving, Hans A. K., 644 00 Torshälla (SE)
(72) Inventor: Merving, Hans A. K., 644 00 Torshälla (SE)
(74) Representative: Hedman, Anders
(86) International application number: PCT/SE2006/001171
(87) International publication number: WO 2008/039122

(56) References cited:
- EP-A1- 0 400 882
- WO-A1-94/06276
- US-A- 2 970 348
- US-A- 2 970 404
- US-A- 4 308 689
- US-A- 4 905 021
- US-A- 5 207 021
- US-A- 5 408 781
- US-A- 5 505 021

## Description

### TECHNICAL FIELD

The present invention concerns the administering of treatment substance generally to porous elements, such as wood, and in particular to plants, trees etc. by means of a capsule for delivering such substance to the interior of the element.

### BACKGROUND

U.S. Patents 4,905,410, 5,485,698 and 5 408 781 disclose tree treatment capsules including a plug for insertion into an end opening of an internal cavity of a container. The capsule is introduced into a bore formed in a tree, with a protruding outer end of the plug engaging a bottom end of the bore. An impact force is then applied to a head element of the plastic container, outside the tree, to move the head element towards the plug and break a shank of the container. A chemical agent is released from the internal cavity when the shank is broken in this way. Generally, the use of these known capsules has advantageous effects and provides good final results, but involves rather time-consuming preparation due not only to the large number of bores required but also to the comparatively strict requirement for appropriate dimensions, especially depth, of the bores formed in the porous elements.

### SUMMARY

It is a general object of the present invention to provide an improved administering of treatment substance to porous elements, specifically by facilitating the preparation work and/or by reducing the amount of such preparation work.

In particular it is an object of the invention to suggest a convenient and cost effective method of administering treatment substance to porous elements, whereby in particular the preparation work on said elements will be greatly facilitated.

Another object of the invention is to provide a capsule for use in administering treatment substance to a porous element in accordance with the basic principles of the invention.

These and other objects are met by the invention as defined by the accompanying patent claims.

The invention generally relates to the administering or supply of treatment substance to a porous element by means of a capsule adapted for insertion into a bore of the element and consisting of a container having closed and open ends and a shank portion connecting said ends and forming a treatment substance cavity within said container, and a plug being partially fitted into the open end of the container, whereby treatment substance is supplied to the element by driving the plug into the cavity to break open the shank portion of the container. It has been recognized that essentially improved efficiency may be achieved by allowing the capsule receiving bores to be formed with optional depth. A basic idea is to accomplish this by introducing the capsule with the closed end of the container first, into the bore and by supporting the container adjacent said open end thereof, against an outer surface of the porous element prior to driving the plug into the cavity.

According to a further aspect of the invention an improved capsule for administering treatment substance is provided that is adapted for use with the inventive method. The capsule includes a container having closed and open ends and a shank portion connecting said ends and forming a treatment substance cavity within said container, and a plug being partially fitted into the open end of the container. A basic idea of this aspect is to provide a container wherein an outer support structure is provided on the container, close to the open end thereof.

By tapering the shank of the container towards the closed container end such that the shank portion has its major circumferential dimension towards said open end a portion of the shank will be broken up by direct contact with the plug being driven down and insertion of the capsule into the bore will simultaneously be facilitated.

In one embodiment that may be specifically preferable for applications requiring multiple treatments, the treatment substance cavity is divided into multiple compartments.

In another embodiment that may be particularly preferable for use for the administering of fluid treatment substances, the plug and the container are each provided with complementary cooperating and coengaging sealing means.

Advantages offered by the present invention, in addition to those described above, will be readily appreciated upon reading the below detailed description of embodiments of the invention.

### BRIEF DESCRIPTION OF THE DRAWINGS

The invention, together with further objects and advantages thereof, will be best understood by reference to the following description taken together with the accompanying drawings, in which:
- Fig. 1A: is a partly schematical exploded side view illustrating a first embodiment of a capsule for administering treatment substance according to the invention;
- Fig. 1B: is a side view of the assembled treatment substance capsule of Fig. 1A;
- Fig. 2A: is an exploded view corresponding to that of Fig. 1A, illustrating the capsule of the invention in section;
- Fig. 2B: is a view corresponding to that of Fig. 1B illustrating the assembled capsule of the invention in section;
- Fig. 2C: is a view corresponding to that of Fig. 2B illustrating the capsule of the invention with treatment substance added to the cavity;
- Fig. 3A: is a detailed side view of the container part of the capsule of Fig. 1A;
- Fig. 3B: is a detailed bottom view of the container part of the capsule of Fig. 1A;
- Fig. 3C: is a detailed top view of the container part of the capsule of Fig. 1A;
- Fig. 4A: is a detailed side view of the plug part of the capsule of Fig. 1A;
- Fig. 4B: is a detailed bottom view of the plug part of the capsule of Fig. 1A;
- Fig. 4C: is a detailed top view of the plug part of the capsule of Fig. 1A;
- Fig. 5: is a schematical illustration of steps I-IV of a method according to the invention for administering treatment substance by means of the capsule of Figs 1A-B;
- Fig. 6: illustrates a section through a second embodiment of the capsule for administering treatment substance according to the invention;
- Fig. 7: illustrates a partial section through a third embodiment of the treatment substance administering capsule according to the invention;
- Fig. 8A: is a schematical top view of the container of a first variant of the third capsule embodiment of Fig. 7;
- Fig. 8B: is a schematical top view of the container of a second variant of the third capsule embodiment of Fig. 7;
- Fig. 9: illustrates a sealed plug part for a treatment substance administering capsule, in side, top and bottom views;
- Fig. 10: illustrates an alternative embodiment of the plug part of the treatment substance administering capsule according to the invention, in a side view and in section;
- Fig. 11A: is an exploded side view, in section, of a further alternative, forth embodiment of the treatment substance administering capsule according to the invention;
- Fig. 11B: illustrates the plug part of the forth embodiment of the capsule, in side an top views;
- Fig. 12: illustrates alternative embodiments of the closed bottom of the container part of the treatment substance administering capsule according to the invention;
- Fig. 13: illustrates a practical application of the treatment substance administering capsule according to the invention;
- Fig. 14: illustrates a further practical application of the treatment substance administering capsule according to the invention;
- Fig. 15: is a side view of a further embodiment of a container for a treatment substance administering capsule according to the invention, especially suitable for use in the application of Fig. 14;
- Fig. 16A: is a side view of an alternative embodiment of a container for a treatment substance administering capsule according to the invention, being suitable for use in the application of Fig. 14;
- Fig. 16B: is an end view from above of the embodiment of Fig. 16A;
- Fig. 17A: is a side view, partially in section, of a fifth alternative embodiment of the treatment substance administering capsule according to the invention, in an assembled condition; and
- Fig. 17B: is a side view corresponding to that of Fig. 17A, illustrating the fifth embodiment of the treatment substance administering capsule according to the invention in an activating phase.

### DETAILED DESCRIPTION

The invention will now be explained with reference to exemplifying embodiments thereof, which are illustrated in the accompanying drawing figures and serve to exemplify the use of the principles of the invention in different applications for administering or supplying a treatment substance, such as a chemical agent, to the phloem layer of a tree. The substance may be either a herbicide or any other tree destroying agent if the treatment is designed to kill the tree, an insecticide if the treatment is designed for noxious insect control, or a fertilizer, fungicide or other medicant or nutrient if the treatment is designed to cure the tree from a disease or a nutrient deficiency. It shall be emphasized, though that the illustrations are for the purpose of describing preferred embodiments of the invention and are not intended to limit the invention to the details thereof. The invention may therefore also be used for other applications such as the delivery of dye or an impregnation agent in order to change the color or other characteristics of a plant or tree trunk, either living or felled, or any other porous element.

The prior art solutions of the initially discussed kind, for introducing treatment substance in a porous element such as a tree trunk, are all based on the insertion of a capsule into a bore in the element with an open end of a container first, said open end being temporarily closed by an installed plug. To achieve the desired function the capsule must be introduced into the bore until the plug abuts the bottom of the bore, which requires the formation of a bore with relatively narrow tolerance with regard to its depth. Forming such bores with narrow tolerance is unnecessarily time consuming and undesirable.

The present invention eliminates this shortcoming in the prior art by suggesting a solution that allows for the formation of a capsule receiving bore having optional length, which will make the work of forming bores much quicker and more effective.

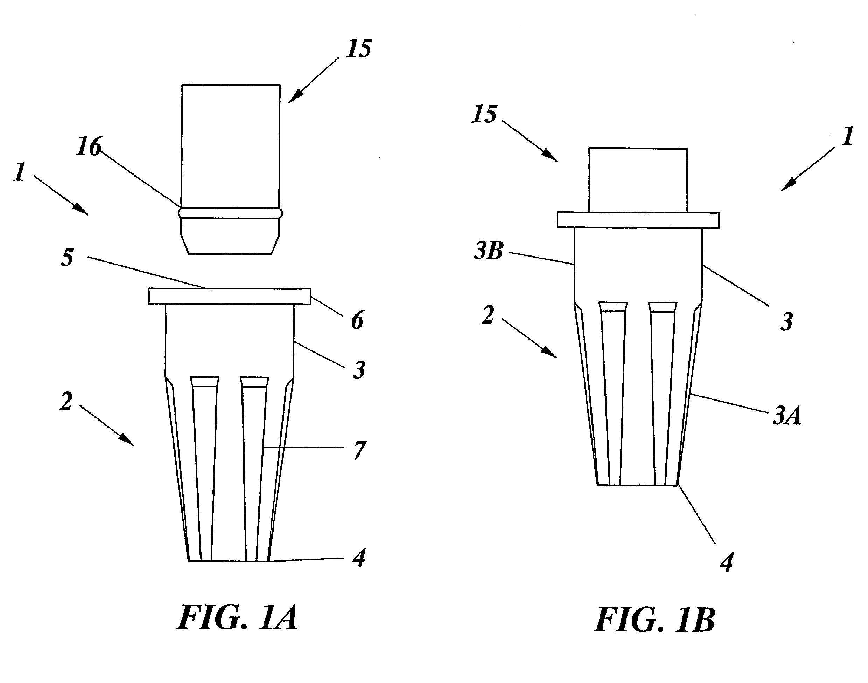

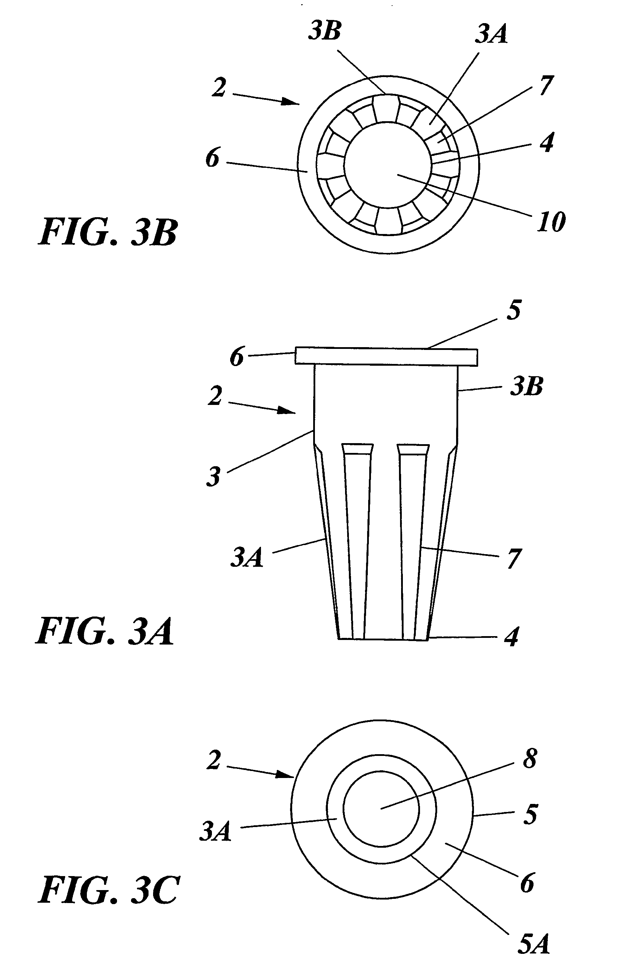

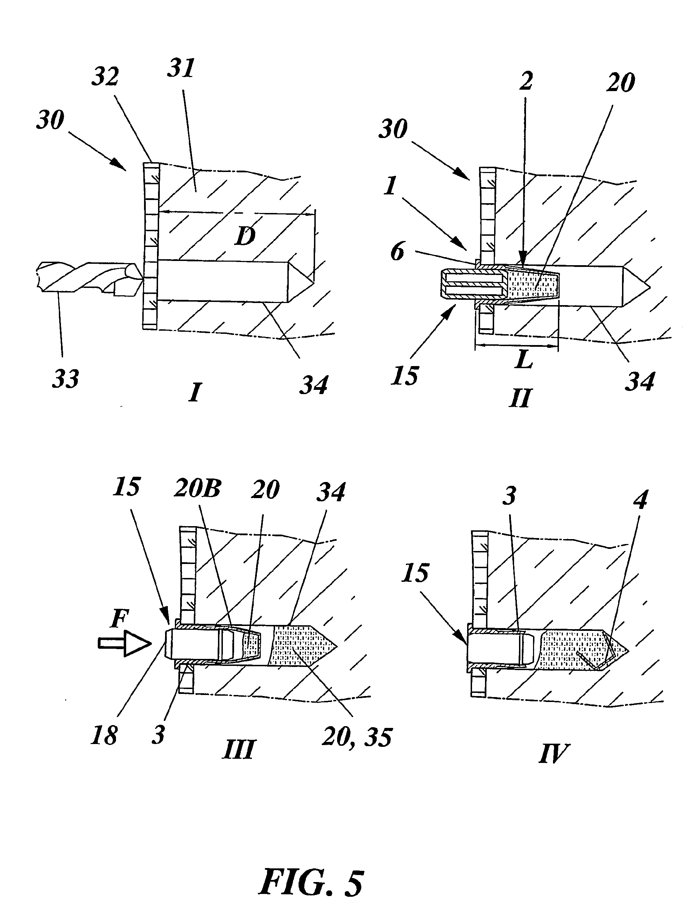

A first exemplifying embodiment of the invention is shown in Figs. 1-5, wherein the present invention is embodied in a tree treatment capsule 1 that with reference to Fig. 5 is adapted for insertion into a predrilled bore 34 formed in the trunk of a tree 30 to be treated. The bore extends through the bark 32 and into the phloem layer 31 of the tree 30, as will be described below, in association with Fig. 5. The capsule 1 includes a container 2 having a closed end 4, an open end 5 and a hollow shank portion 3 interconnecting the closed and open ends 4 and 5, respectively. The shank portion 3 of the container 2 forms an internal cavity 8 that is open at one end and closed at the other to receive a treatment substance 20 therein in an assembled condition of the capsule 1.

The shank 3 consists of a first portion 3A tapering towards the closed end 4 and a generally cylindrical second portion 3B adjacent the open container end 5. The tapering first shank portion 3A is in this embodiment integral with a bottom wall 10 forming said closed end of the container 3 and of said internal treatment substance cavity 8. For reasons to be described later, the tapering first shank portion 3A is at least partially frangible so that it may be appropriately broken to allow the treatment substance to exit the cavity 8 and enter the bore 34. In the illustrated embodiment, this is achieved by providing multiple evenly spaced notches 7 around the circumference of said first shank portion 3A, extending along the first shank portion towards the closed container end 4. These notches 7 will serve as crack initiating means when a breaking force is applied to the container 3, as will be explained below. The cylindrical second shank portion 3B is formed integral with the open container end 5 that is in turn formed integral with an outer stop flange 6 that circumferentially surrounds said open end 5 for abutting an outer surface of said tree 30 when the capsule is inserted into said bore 34. Therefore, the actual shank 3 has an outer diameter smaller than the diameter of the bore 34 in the tree 30 but the stop flange has an outer diameter essentially exceeding the diameter of the bore 34.

The open container end 5 has a circular opening 5A for receiving a plug 15. The plug 15 is inserted into the open container end 5 during assembly of the capsule 1, closing said open second end 5 and retaining said treatment substance 20 in the internal cavity 8. The plug 15 is generally cylindrical in shape and has a diameter slightly smaller than the inner diameter of the second shank portion 3B and of the circular opening 5A, to provide a tight fit for the fully installed plug 15 in the container 2. The plug 15 has a chamfered insertion end 17 to facilitate insertion into the open container end 5 and an opposite end having a flat impact surface 18 for applying a plug driving impact force F thereto during activation of the treatment capsule 1.

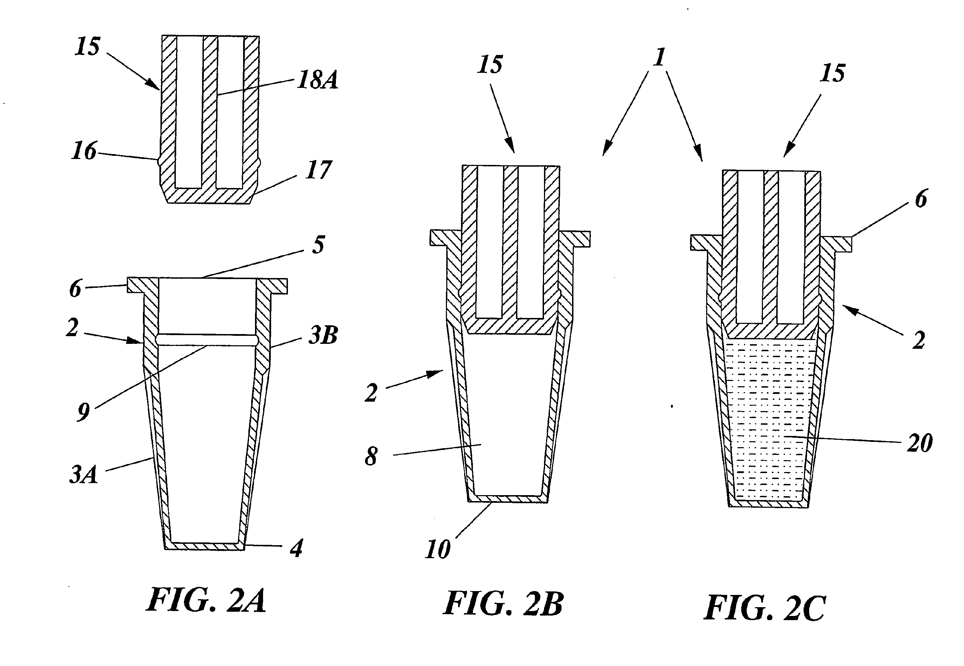

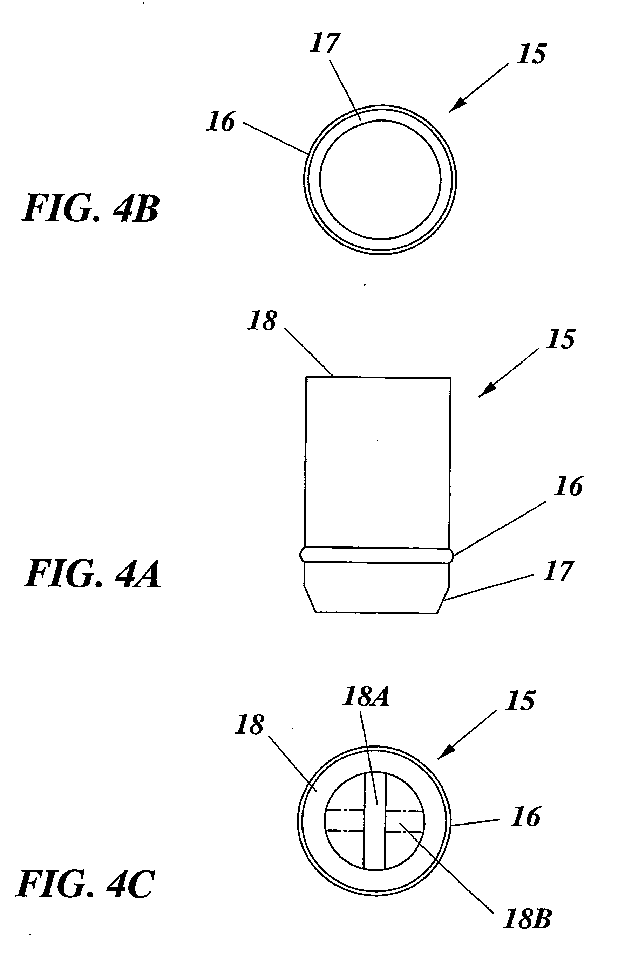

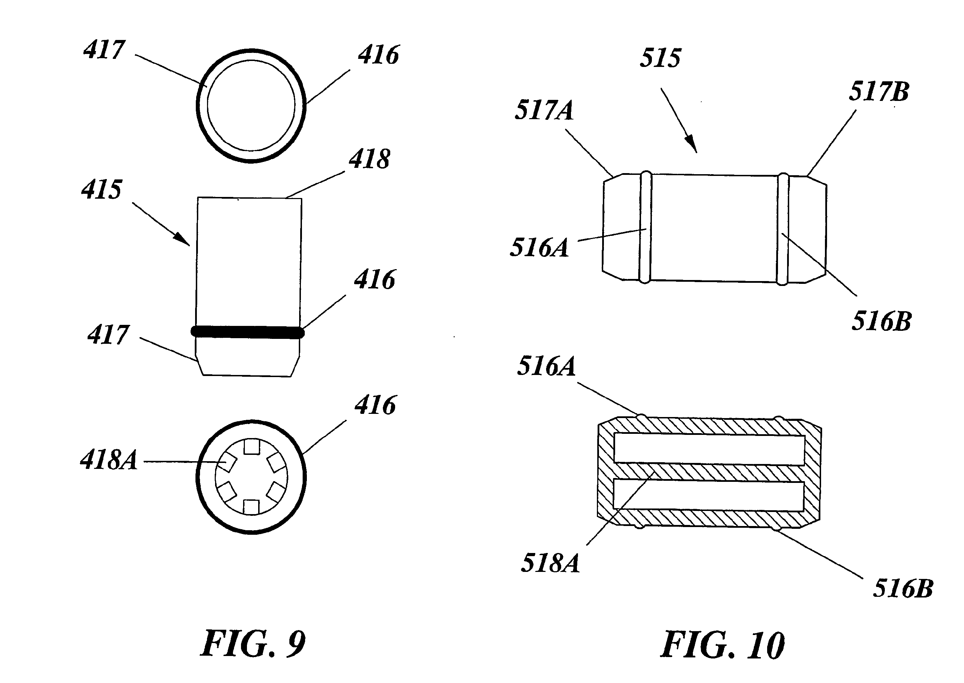

Referring specifically to Figures 2A-C and 4A-C, it is apparent that the plug 15 may preferably be hollow, with a series of reinforcing ribs 18A, 18B integrally formed with and on the circumferential inner surface of the plug 15 to provide a lightweight and yet strongly reinforced structure that will be snugly received within the shank 3 when the capsule 1 is fully assembled. The ribs 18A, 18B may preferably be arranged at equal circumferential spacings extending crosswise over its full hollow interior as in this first embodiment, but may alternatively extend only a limited distance into said hollow interior, as is shown for the ribs 418A in the alternative embodiment of Fig. 9. The plug 15 is provided with a circumferentially protruding ridge 16 on the outer cylindrical surface thereof. The ridge 16 is preferably provided at a location adjacent the chamfered end 17 of the plug 15. As will become clear, when capsule 1 is assembled, the ridge 16 of plug 15 interlocks with a recess 9 formed in the radially inner surface of the second cylindrical shank portion 3B to secure plug 15 in open end 5 of the container 2.

In assembling the capsule 1, the treatment substance is introduced into the cavity 8 of the container 2 and the plug 15 is then inserted into open end 5 of the container 10. Plug 15 is forced into the open end until ridge 16 snaps into engagement with and is completely received in recess 9, as is shown in Fig. 2C. The cylindrical plug 15 tightly fits in the open end 5 and cylindrical shank portion 3B. Ridge 16 is completely received in and tightly engaged with recess 9 to completely seal off the open end 5 of container 2. An appropriate connection between capsule parts, i.e. container 2 and plug 15, is therefore provided. Although a tight fit is normally obtained between the plug 15 and the container 2 due to the interengagement of ridge 16 and recess 9, it is possible to additionally apply an adhesive or alternatively a sealing coating on the plug 15 and/or container 2 and specifically in the area of the ridge 16 and the recess 9 to further seal and/or secure the plug 15 in the open end 5 in order to provide a superior seal. The treatment substance 20 may be of any of the above mentioned kinds, being appropriate for the application in question, such as a herbicide or a fungicide, and in any appropriate form, such as a tablet, a powder, a gel material, a pasty material, a liquid or even a gas.

The method of applying the fully assembled capsule 1 of the invention will now be described with reference to Fig. 5. In a first step I, an appropriate tool, here a drill 33, is employed to form a bore 34 in a tree 30, in this case a tree trunk, through the bark 32 and into the phloem layer 31 of the tree 30. According to the invention the bore is formed in the tree 30 having an optional depth D exceeding the axial length L of the shank 3 of the capsule container 2 from said closed 4 to said open end 5. The bore 34 is further dimensioned to have an internal diameter slightly exceeding the outer diameter of the actual shank portion 3 and clearly smaller than the outer diameter of the stop flange 6. In a second step II the assembled treatment substance containing capsule 1 is then inserted into the predrilled bore 34 in the trunk of the tree 30 to be treated. The capsule 1 is inserted into the bore 34 of the tree 30 until the container stop flange 6 abuts against the outer surface in the tree 30, in this case the bark 32. In a third step III a driving force, in this embodiment an impact force, is applied to the plug 15 such as by hammering in the direction shown by arrow F in Fig. 5, causing the plug 15 to move further into the shank portion 3 of the container 2 and into the cavity 20 such that the chamfered end 17 engages the tapered shank portion 3A and forces it to expand radially outwardly until the tapered shank portion 3A breaks along the weakening notches 7. In the first phase of this breaking up of the tapered shank wall 3A, passages 20B are formed through the wall at said notches 7 to permit the treatment substance 20, at least if it is in gel-like or liquid form, to be released and mix with the sap 35 of the tree 30, or to permit the sap 35 of the tree 30, if the treatment substance is in the form of a tablet or a powder, to permeate and mix with the treatment substance 20. Because passages 20B are located in the central part of shank, they are more precisely aligned with the phloem layer of tree 3. The substance 20 contained in the capsule 1 is therefore more precisely released into this phloem layer. Due to the expansion of the first shank portion 3A by the driven plug 15, a very tight fit will be obtained between the container 2 of the capsule 1 and the bore 34 in the tree 30 after the driving force F has been applied. This causes the capsule 1 to be held firmly in the tree 30. In a final phase IV of the application the plug 15 may be driven down so that the lower part of the tapered shank portion 3A, together with the lowermost closed container end 4 is completely torn off from the remainder of the container 2 to provide unrestricted distribution of substance 20 and sap 35.

All or some portions of the capsule 1 may be made of different formulations of plastic materials, such as by injection molding or extrusion molding; polyvinyl alcohol or starch materials, to facilitate dissolution of parts of the shank walls upon contact with the sap of a tree, the fluid in cut flower stems, or similar liquids; wood; paperboard; fibre; formulations of plaster; or metal. All parts may advantageously be made of a suitable biodegradable material. The container 2 shank 3 is preferably made of a brittle, frangible material allowing effective breaking up of the tapered shank portion 3A by the contact with the driven plug 15 that may preferably be made of a higher strength material. In an exemplary embodiment the container 2 is made of polystyrene or polycarbonate and the plug 15 is made of polyethylene. Making the container 2 and plug 15 of these different plastic materials enables the container 2 to be broken more easily than plug 15.

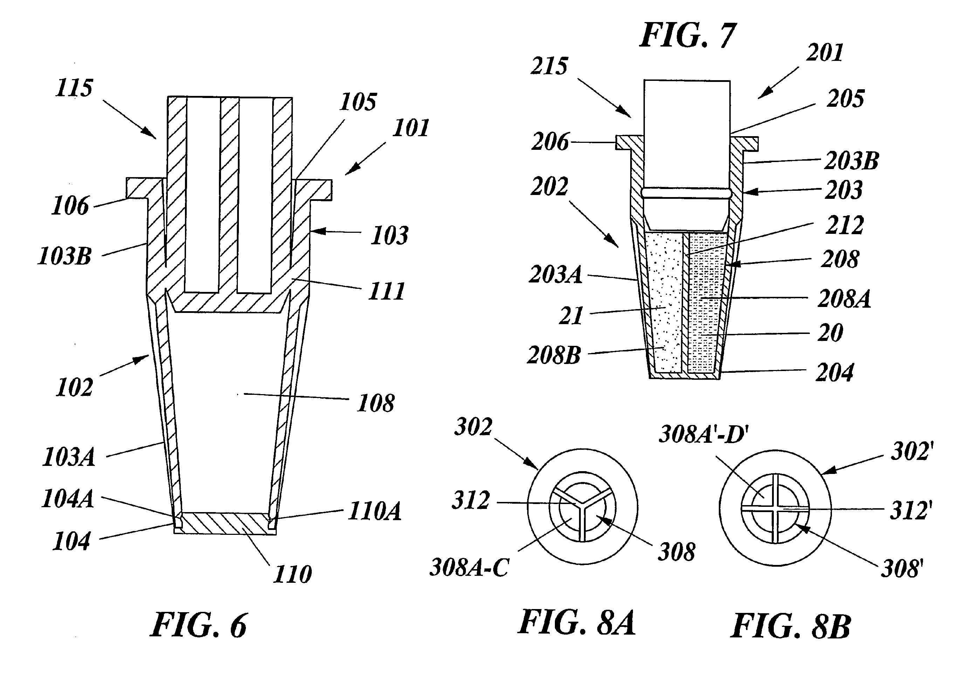

A second embodiment of a capsule 101 of the invention is shown in Fig. 6. Many elements of this second embodiment are the same as corresponding elements of the first embodiment and a repetitive description of these elements is not provided. The second embodiment is intended for use in the same way as the first embodiment of Figs 1-5, but differs therefrom essentially by the fact that the container 102 and the plug 115 are formed as an integral unit, retained in relative position by the attachment to each other in a connection portion 111 that will break when applying driving force to the plug 115. To allow filling of the cavity 108 with treatment substance, the container 102 in this embodiment has a separate bottom 110 forming the closed container end 104 and being releasably attached to the tapered shank portion 103A by a ridge 110A and recess 104A type snap-in connection similar to that for the releasable connection between the plug and container in the first embodiment.

In a third embodiment of the capsule 201 shown with variants in Figs. 7 and 8A-8B, the containers 202, 302 and 302', respectively, are identical in all respects to the container 2 of the first embodiment, except that they include at least one dividing wall 212, 312, 312', respectively, within the cavity volume 208, 308, 308', respectively. In Fig. 7 is illustrated a basic variant where one straight dividing wall 212 extends across the cavity 208 and separates sub-chambers 208A, 208B from each other. One substance 20, such as an insecticide, may be stored in one of the chambers 208A, while another substance 21, such as a fungicide, may be stored in the other chamber 208B. Figures 8A and 8B illustrate variants where additional sub-chambers 308A-C, 308A'-D' may be formed by including additional or alternatively configured dividing walls 312, 312'. The dividing walls can be formed of the same material as the container, as described previously, and will break up when the plug is driven down, to thereby release the contained substance.

In Fig. 9 is illustrated an alternative plug 415 providing excellent sealing between the plug and the shank. In this case the plug 415 is formed with a recess, not specifically shown, in place of the ridge of the first embodiment, and in this recess is received a seal 416, such as an O-ring, that in the fully assembled condition will be received in the recess in the container shank to provide a fluid tight seal for the substance in the cavity.

A further embodiment of the plug 515 is illustrated in Fig. 10. Here, both ends 517A and 517B of the plug 515 are chamfered and provided with a retaining ridge 516A, 516B. Such an embodiment will primarily facilitate assembly, specifically allowing for an automated assembly.

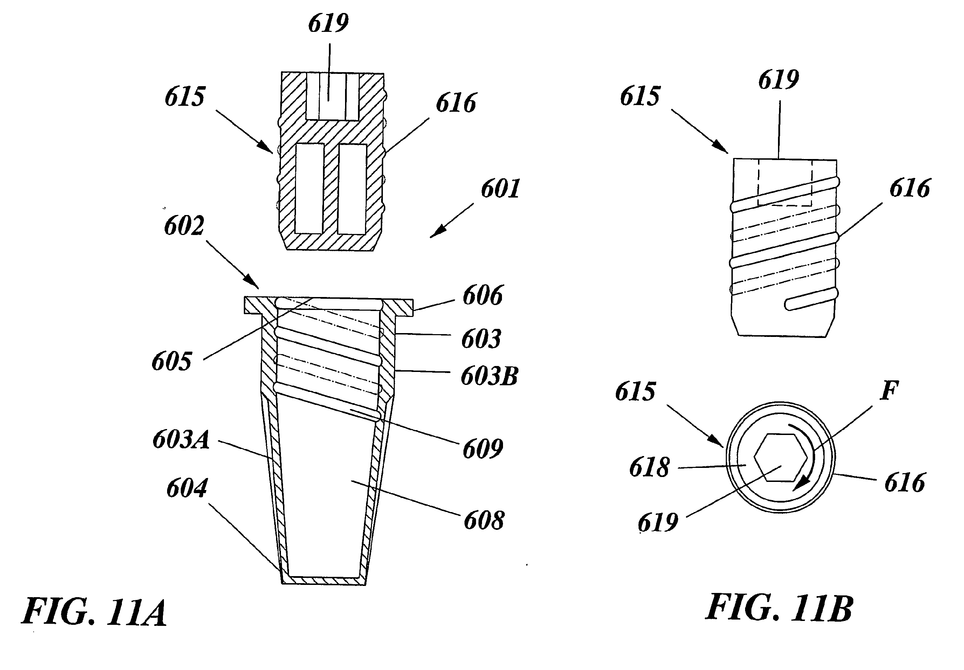

In a further embodiment of the inventive capsule 601, illustrated in Figs 11A and 11B, the sealing of the open end 605 of the container 602 and the retaining of the plug 615 in the fully assembled condition is achieved by providing a retaining ridge 616 in the form of an external thread on the outer circumference of the plug 615 and a groove in the form of a complementary internal thread 609 in the inner wall of the second shank portion 603B. The threads 616, 609, may have an optional pitch adapted to the specific application, as indicated in Figs. 11A and 11B. In extreme cases they may also be additionally sealed with an appropriate coating. It will be understood that in this case the driving of the plug 615 into the cavity 608 will be accomplished by applying a rotary driving force F through a screw socket 619 in the plug end wall 618 and an appropriate tool (not shown).

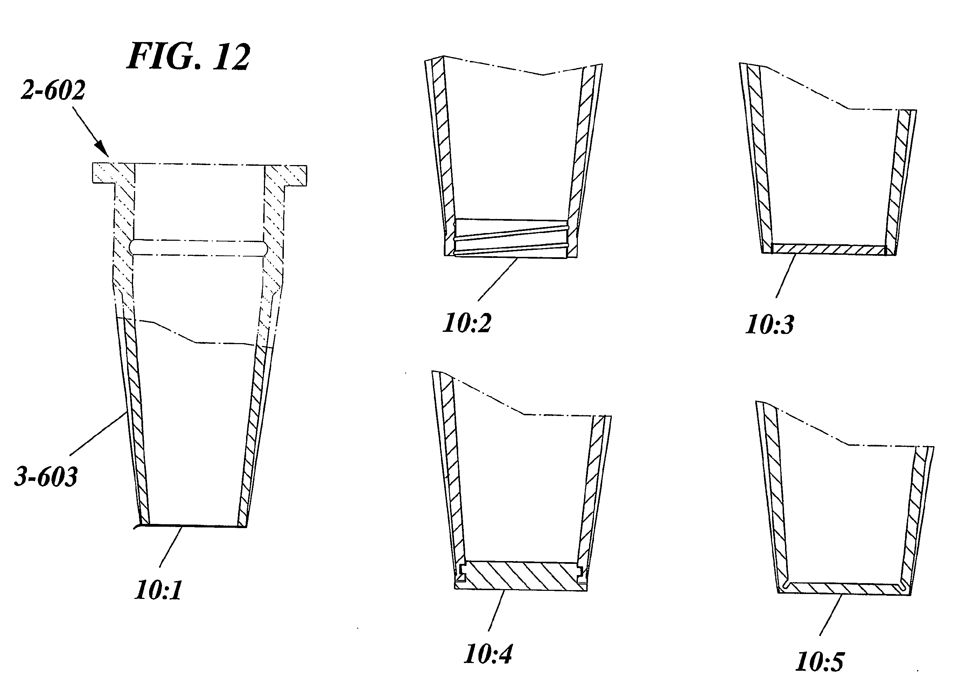

In Fig. 12 are shown alternative solutions for closing the container closed end. These alternative solutions may in applicable cases be used for all of the previously described container embodiments 2-602. Of these variants the first four comprise separate bottom walls 10:1-10:4 that are attached to the container 2-206 prior to or after filling the treatment substance cavity, depending upon the capsule embodiment. Of these, bottom wall 10:1 is a tape that is adhered to the bottom container end; bottom wall 10:2 carries an external thread and is screwed into the container end, having an internal thread formed therein; bottom wall 10:3 is inserted into the container end and is secured thereto by an appropriate adhesive; and bottom wall 10:4 is secured to the container by means of a type of bayonet lock. In the fifth variant the bottom wall 10:5 is made integral with the container 2, having weakening notches formed at its edge to allow breaking away of the bottom wall when driving down the plug.

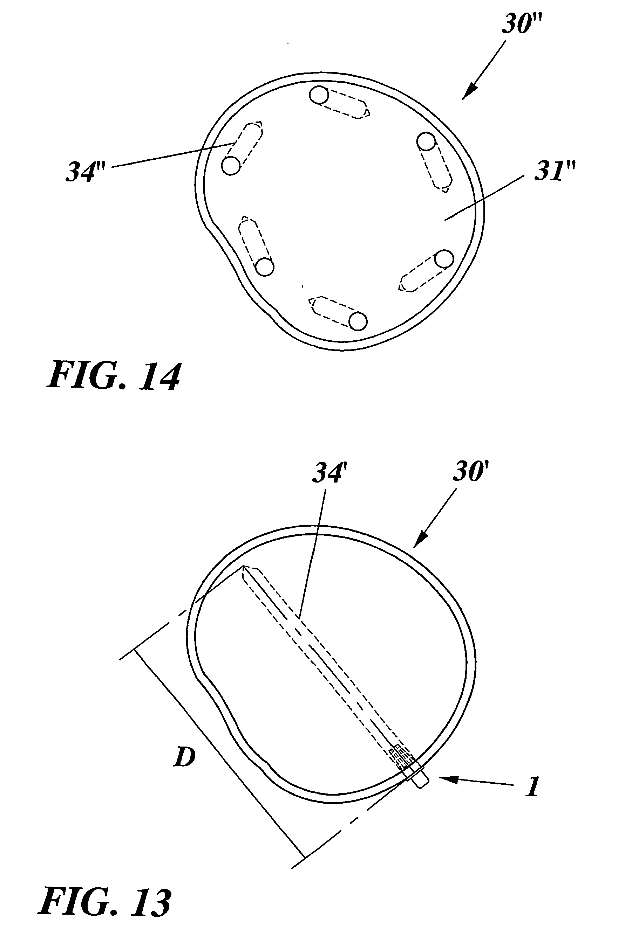

In Fig. 13 is shown a further favourable effect of the optional bore 34' depth D allowed according to the invention. In the illustrated embodiment a bore 34' is formed from one side of a tree trunk 30' and extends across the major portion of the trunk. When the container of the capsule 1 has been broken up in the described way, the treatment substance is distributed very advantageously across the trunk due to the extension of the bore and the large amount of sap flowing into the bore 34'. This will normally reduce the total number of bores that will have to be formed in the tree.

Fig. 14 shows a further variant with bores 34" formed in a stump 30" of a tree. Several bores 34" are distributed close to the outer circumference of the tree stump and are formed at an angle to the upper surface of the stump to provide excellent distribution of treatment substance in the stump.

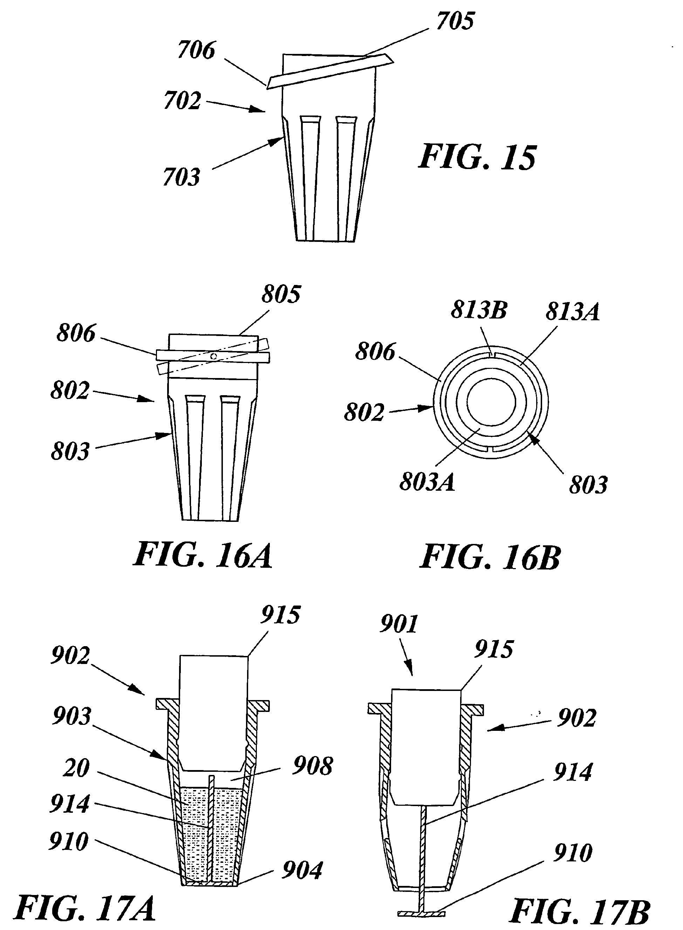

In Fig. 15 is given an example of a container 702 design for the inventive capsule that is specifically adapted for use in an application like the one illustrated in Fig. 14, where angled bores are formed in a tree or a tree stump. In this example, the container carries a fixed angled flange 706 on the outer circumference of the shaft 703, adjacent the open container end 705. In a modified design, illustrated in Figs. 16A-B, of a container 802 intended for use in a similar application, the actual container 802 may be provided with a straight flange 806 that is provided at a distance from the open end 805 of the container. In this embodiment the flange 806 is only locally connected to, preferably integral with, the shaft 803 through narrow webs 813B, leaving gaps 813A separating the flange 806 from the shaft 803 around the major portions of the outer circumference of the shaft. Due to the flexibility of the container material, the flange 806 will in this case be automatically adjusted in position in relation to the angle of its associated bore, when the capsule is inserted and activated in the bore. This is schematically illustrated in dash-dot lines in Fig. 16A.

Finally, Figs. 17A-B illustrate a further modified variant of the tree treatment capsule 901 of the invention. Here, the capsule 901 container 902 has a separate releasable bottom 910 fitted to or formed integral with the closed end 904 of the container, similar to the bottom designs 10,10:3 or 10:5 as illustrated in Fig. 12. This separate bottom 910 is at its upper side, facing the cavity 908 for the substance 20, provided with a central rod 914 that extends along a major portion of the cavity 908, and to a position close to the lower end of the plug 915, in its assembled condition. The rod 914 may be formed integral with or attached to the bottom. When driving force is applied to the plug 915 and the plug engages the rod 914, the bottom 910 will be quickly pushed out or broken off from the closed container end 904 so that the substance 20 immediately leaves the cavity and cannot escape upwardly past the plug 915 even when the substance is a highly viscous fluid. In an alternative design the central rod may be formed integral with or attached to the bottom face of the plug instead, so that the plug and container rod form a unit that when bewing driven down causes the bottom to be completely released from the container.

Although the invention has been described and illustrated with specific reference to an application for a tree trunk or stump, the invention is in no way restricted to such applications, as indicated above. The basic principles of the invention may be applied to treat other porous elements by impregnation, dying etc.

The invention has been described in connection with what is presently considered the most practical and preferred embodiments, but it is to be understood that the invention is not limited to the disclosed embodiments. The invention is intended to cover various variations, modifications and equivalent arrangements included within the scope of the appended claims.

## Claims

1. A method of applying treatment substance (20) to the interior of a porous element (30; 30'; 30") comprising the steps of:
- providing a treatment substance capsule (1; 101; 201; 301; 601; 901) including a container (2; 102; 202; 302; 602; 702; 802; 902) having a closed end (4; 104; 204; 604; 904), an open end (5; 105; 205; 605; 705; 805) and a shank (3; 103; 203; 603; 703; 803; 903) interconnecting said closed and open ends, and having an internal cavity (8; 108; 208; 308; 308'; 608; 908), treatment substance (20; 21) disposed in said internal cavity, and a plug (15; 115; 215; 415; 515; 615; 915) fitted in the open end of said container, said plug in an assembled condition closing said open end and retaining said treatment substance in said internal cavity,
- forming at least one bore (34; 34'; 34") into the interior of said element; **characterised in that**
- inserting an assembled tree treatment capsule with said closed end first into said bore or each bore formed in the element so that an outer stop flange (6; 106; 206; 606; 706; 806) at said open end of the capsule abuts an outer surface (31; 32) of said element, and
- applying driving force (F) to said plug to move it through said open end, into the cavity, causing at least a portion (3A; 103A; 203A; 603A; 10; 10:1; 10; 2; 10:3; 10:4; 10:5; 110; 910) of the container to break, thereby releasing treatment substance from said internal cavity by permitting it to pass from said internal cavity and into said bore.

2. A method according to claim 1, wherein a treatment substance capsule (1; 101; 201; 301; 601; 901) is provided having a first shank portion (3A; 103A; 203A; 603A) tapering towards said closed container end (4; 104; 204; 604; 904) and wherein said plug (15; 115; 215; 415; 515; 615; 915) is forced through said open end (5; 105; 205; 605; 705; 805) and said cavity, into engagement with the tapering shank portion, breaking said shank portion by direct contact therewith.

3. A method according to claim 1 or 2, wherein the at least one bore (34; 34'; 34") is formed in said porous element (30; 30'; 30") having a depth (D) being essentially larger than an axial length (L) of the shank (3; 103; 203; 603; 703; 803; 903) of the capsule (1; 101; 201; 301; 601; 901) from said closed (4; 104; 204; 604; 904) to said open (5; 105; 205; 605; 705; 805) end.

4. A method according to any of claims 1 - 3, wherein said driving force (F) is applied to said plug (615) by a rotary manipulation thereof and by the mutual engagement between external and internal threads (616; 609) on the plug and the container (602), respectively.

5. A method according to any of claims 1 - 4, wherein several different treatment substances (20; 21) are simultaneously released from separate compartments (208A-B; 308A-C; 308A'-D') of said internal cavity (208; 308; 308') by the driving of said plug (215) into the cavity.

6. A capsule (1; 101; 201; 301; 601; 901) for insertion into a bore (34; 34'; 34") of a porous element (30; 30'; 30") to apply treatment substance (20; 21) to the interior of the element, said capsule comprising:
- a container (2; 102; 202; 302; 602; 702; 802; 902) having a closed end (4; 104; 204; 604; 904), an open end (5; 105; 205; 605; 705; 805) and a shank (3; 103; 203; 603,703; 803; 903) interconnecting said closed and open ends, and having an internal cavity (8; 208; 308; 308'; 608; 908) for receiving treatment substance therein,
- a plug (15; 115; 215; 415; 515; 615; 915) for insertion into the open end of said capsule, said plug in an assembled condition closing said open end and retaining said treatment substance in said internal cavity; **characterised in that**
- an outer stop flange (6; 106; 206; 606; 706; 806) at said open end, for abutting an outer wall (32; 31 ") of said element when inserted into said bore.

7. A capsule (1; 101; 201; 301; 601; 901) according to claim 6, wherein a first portion (3A; 103A; 203A; 603A) of the shank (3; 103; 203; 603; 703; 803; 903) is tapered towards said closed end (4; 104; 204; 604; 904) and is manufactured from a frangible material and/or alternatively has crack initiating notches (7) formed therein to allow said plug (15; 115; 215; 415; 515; 615; 915) to be forced through said open end (5; 105; 205; 605, 705; 805) and said cavity (8; 208; 308; 308'; 608; 908), into engagement with the tapering first shank portion, breaking said shank portion by direct contact therewith.

8. A capsule (1; 101; 201; 301; 601; 901) according to claim 6 or 7, wherein attachment means (16, 9; 111; 416; 616, 609) are provided on the outer circumference of the plug (15; 115; 415; 615; 915) and on the inner circumference of a generally cylindrical second shank portion (3B; 103B; 203B; 603B), respectively, for releasably retaining said plug (15; 115; 415; 615; 915) and container (2; 102; 602; 702; 802; 902) in a mutually sealed assembled condition.

9. A capsule (201) according to any of claims 6 - 8, wherein the container (202; 302; 302') comprises internal dividing walls (212; 312; 312') dividing the inner cavity (208; 308; 308') into several sub-chambers (208A-B; 308A-C; 308A'-D') each containing a separate treatment substance (20; 21) in the assembled condition.

10. A capsule (1; 101; 201; 301; 601; 901) according to any of claims 6-9, wherein said closed end (4; 104; 204; 604; 904) of the container (2; 102; 202; 302; 602; 702; 802; 902) comprises a bottom wall that is (110; 10:1; 10:2; 10:3; 10:4; 910) releasably attached to the shank (3; 103; 203; 603; 903) at said closed end (4; 104; 204; 604; 904) or that is (10; 10:5) alternatively formed integral with the tapered first shank portion (3A; 103A; 203A; 603A).

11. A capsule (901) according to any of claims 6-9, wherein, in its assembled condition, a central rod (914) extends along a major portion of the cavity (908) and is formed integral with or attached to either a bottom wall (910) at said closed end (904) of the container (902) or the plug (915).

## Patentansprüche

1. Verfahren zum Aufbringen einer Behandlungssubstanz (20) auf das Innere eines porösen Elementes (30; 30'; 30"), umfassend die Schritte:
- Bereitstellen einer Behandlungssubstanzkapsel (1; 101; 201; 301; 601; 901), beinhaltend einen Behälter (2; 102; 202; 302; 602; 702; 802; 902), der ein geschlossenes Ende (4; 104; 204; 604; 904), ein offenes Ende (5; 105; 205; 605; 705; 805) und einen Schaft (3; 103; 203; 603; 703; 803; 903) aufweist, der die geschlossenen und offenen Enden miteinander verbindet, und der eine innenliegende Kavität (8; 108; 208; 308; 308'; 608; 908) aufweist, wobei die Behandlungssubstanz (20; 21) in der innenliegenden Kavität angeordnet ist, und einen Verschlussstopfen (15; 115; 215; 415; 515; 615; 915) aufweist, der in das offene Ende des Behälters eingepasst ist, wobei der Verschlussstopfen in einem zusammengesetzten Zustand das offene Ende verschließt und die Behandlungssubstanz in der innenliegenden Kavität hält,
- Ausbilden mindestens eines Bohrlochs (34; 34'; 34") in dem Inneren des Elementes,
**gekennzeichnet durch**
- Einsetzen einer zusammengesetzten Baumbehandlungskapsel mit dem geschlossenen Ende voran in das oder jedes in dem Element ausgebildete Bohrloch derart, dass ein äußerer Halteflansch (6; 106; 206; 606; 706; 806) an dem offenen Ende der Kapsel an einer äußeren Oberfläche (31; 32) des Elementes anliegt und
- Aufbringen einer Triebkraft (F) auf den Verschlussstopfen, um diesen **durch** das offene Ende in die Kavität hinein zu bewegen, Bewirken, dass mindestens ein Teil (3A; 103A; 203A; 603A; 10; 10:1; 10:2; 10:3; 10:4; 10:5; 110; 910) des Behälters zerbricht, wodurch Behandlungssubstanz aus der innenliegenden Kavität ausgegeben wird, indem zugelassen wird, dass diese von der innenliegenden Kavität in das Bohrloch hinein gelangt.

2. Verfahren nach Anspruch 1, wobei eine Behandlungssubstanzkapsel (1; 101; 201; 301; 601; 901) bereitgestellt wird, die einen ersten Schaftteil (3A; 103A; 203A; 603A) aufweist, der in Richtung des geschlossenen Behälterendes (4; 104; 204; 604; 904) konisch zuläuft, und wobei der Verschlussstopfen (15; 115; 215; 415; 515; 615; 915) durch das offene Ende (5; 105; 205; 605; 705; 805) und die Kavität in Eingriff mit dem konisch zulaufenden Schaftteil gezwängt wird und den Schaftteil durch direkten Kontakt mit diesem zerbricht.

3. Verfahren nach Anspruch 1 oder 2, wobei das mindestens eine Bohrloch (34; 34'; 34") in dem porösen Element (30; 30'; 30") ausgebildet ist und eine Tiefe (D) aufweist, die wesentlich größer ist als eine axiale Länge (L) des Schaftes (3; 103; 203; 603; 703; 803; 903) der Kapsel (1; 101; 201; 301; 601; 901) von dem geschlossenen (4; 104; 204; 604; 904) bis zu dem offenen (5; 105; 205; 605; 705; 805) Ende.

4. Verfahren nach einem der Ansprüche 1 bis 3, wobei die Triebkraft (F) auf den Verschlussstopfen (615) durch eine rotatorische Handhabung desselben beziehungsweise durch den gegenseitigen Eingriff zwischen Außen- und Innengewinden (616; 609) an dem Verschlussstopfen und dem Behälter (602) aufgebracht wird.

5. Verfahren nach einem der Ansprüche 1 bis 4, wobei mehrere verschiedene Behandlungssubstanzen (20; 21) gleichzeitig von separaten Kammern (208A-B; 308A-C; 308A'-D') der innenliegenden Kavität (208; 308; 308') durch Treiben des Verschlussstopfens (215) in die Kavität ausgegeben werden.

6. Kapsel (1; 101; 201; 301; 601; 901) zum Einsetzen in ein Bohrloch (34; 34'; 34") eines porösen Elementes (30; 30'; 30"), um Behandlungssubstanz (20; 21) auf das Innere des Elementes aufzubringen, wobei die Kapsel umfasst:
- einen Behälter (2; 102; 202; 302; 602; 702; 802; 902), der ein geschlossenes Ende (4; 104; 204; 604; 904), ein offenes Ende (5; 105; 205; 605; 705; 805) und einen Schaft (3; 103; 203; 603; 703; 803; 903) aufweist, der die geschlossenen und offenen Enden miteinander verbindet, und der eine innenliegende Kavität (8; 208; 308; 308'; 608; 908) zum Aufnehmen von Behandlungssubstanz darin aufweist,
- einen Verschlussstopfen (15; 115; 215; 415; 515; 615; 915) zum Einsetzen in das offene Ende der Kapsel, wobei der Verschlussstopfen in einem zusammengesetzten Zustand das offene Ende verschließt und die Behandlungssubstanz in der innenliegenden Kavität hält,
**gekennzeichnet durch**
- einen äußeren Halteflansch (6; 106; 206; 606; 706; 806) an dem offenen Ende zum Anliegen an einer äußeren Wand (32; 31") des Elementes, wenn sie in das Bohrloch eingesetzt wird.

7. Kapsel (1; 101; 201; 301; 601; 901) nach Anspruch 6, wobei ein erster Teil (3A; 103A; 203A; 603A) des Schaftes (3; 103; 203; 603; 703; 803; 903) in Richtung des geschlossenen Endes (4; 104; 204; 604; 904) konisch zuläuft und aus einem zerbrechlichen Material hergestellt ist und/oder alternativ darin ausgebildete Sollbruchkerben (7) aufweist, um dem Verschlussstopfen (15; 115; 215; 415; 515; 615; 915) zu erlauben, durch das offene Ende (5; 105; 205; 605; 705; 805) und die Kavität (8; 208; 308; 308'; 608; 908) in Eingriff mit dem konisch zulaufenden Schaftteil gezwängt zu werden und den Schaftteil durch direkten Kontakt mit diesem zu zerbrechen.

8. Kapsel (1; 101; 201; 301; 601; 901) nach Anspruch 6 oder 7, wobei Befestigungsmittel (16, 9; 111; 416; 616; 609) jeweils an dem äußeren Umfang des Verschlussstopfens (15; 115; 415; 615; 915) und an dem inneren Umfang eines hauptsächlich zylindrischen zweiten Schaftteils (3B; 103B; 203B; 603B) zum lösbaren Halten des Verschlussstopfens (15; 115; 415; 615; 915) und des Behälters (2; 102; 602; 702; 802; 902) in einem gegenseitig abgedichteten montierten Zustand vorgesehen sind.

9. Kapsel (201) nach einem der Ansprüche 6 bis 8, wobei der Behälter (202; 302; 302') innenliegende Trennwände (212; 312; 312') umfasst, die die innenliegende Kavität (208; 308; 308') in mehrere Unterkammern (208A-B; 308A-C; 308A'-D') unterteilt, von denen in dem zusammengesetzten Zustand jede eine separate Behandlungssubstanz (20; 21) enthält.

10. Kapsel (1; 101; 201; 301; 601; 901) nach einem der Ansprüche 6 bis 9, wobei das geschlossene Ende (4; 104; 204; 604; 904) des Behälters (2; 102; 202; 302; 602; 702; 802; 902) eine untere Wand umfasst, die (110; 10:1; 10:2; 10:3; 10:4; 910) lösbar an dem Schaft (3; 103; 203; 603; 903) an dem geschlossenen Ende (4; 104; 204; 604; 904) befestigt ist oder die (10; 10:5) alternativ einteilig mit dem konisch zulaufenden ersten Schaftkegelteil (3A; 103A; 203A; 603A) ausgebildet ist.

11. Kapsel (901) nach einem der Ansprüche 6 bis 9, wobei sich in dem zusammengesetzten Zustand ein zentraler Stab (914) entlang eines Hauptteils der Kavität (908) erstreckt und einteilig ausgebildet ist mit oder befestigt ist an einer unteren Wand (910) an dem geschlossenen Ende (904) des Behälters (902) oder dem Verschlussstopfen (915).

## Revendications

1. Procédé d'application d'une substance de traitement (20) à l'intérieur d'un élément poreux (30 ; 30' ; 30") comprenant les étapes consistant à :
- fournir une capsule de substance de traitement (1 ; 101 ; 201 ; 301 ; 601 ; 901) comprenant un contenant (2 ; 102 ; 202 ; 302 ; 602 ; 702 ; 802 ; 902) ayant une extrémité fermée (4 ; 104 ; 204 ; 604 ; 904), une extrémité ouverte (5 ; 105 ; 205 ; 605 ; 705 ; 805) et une tige (3 ; 103 ; 203 ; 603 ; 703 ; 803 ; 903) interconnectant lesdites extrémités fermée et ouverte, et ayant une cavité interne (8 ; 108 ; 208 ; 308 ; 308' ; 608 ; 908), la substance de traitement (20 ; 21) étant disposée dans ladite cavité interne, et un bouchon (15 ; 115 ; 215 ; 415 ; 515 ; 615 ; 915) ajusté dans l'extrémité ouverte dudit contenant, ledit bouchon dans un état assemblé fermant ladite extrémité ouverte et retenant ladite substance de traitement dans ladite cavité interne,
- former au moins un alésage (34 ; 34' ; 34") dans l'intérieur dudit élément ; **caractérisé par** les sous-étapes consistant à
- insérer une capsule de traitement des arbres assemblée avec ladite extrémité fermée d'abord dans ledit alésage ou chaque alésage formés dans l'élément de sorte qu'une bride d'arrêt externe (6 ; 106 ; 206 ; 606 ; 706 ; 806) au niveau de ladite extrémité ouverte de la capsule bute contre une surface externe (31 ; 32) dudit élément, et
- appliquer une force d'entraînement (F) audit bouchon afin de le déplacer à travers ladite extrémité ouverte, dans la cavité, amenant au moins une portion (3A ; 103A ; 203A ; 603A ; 10 ; 10:1 ; 10:2 ; 10:3 ; 10:4 ; 10:5 ; 110 ; 910) du contenant à se rompre, libérant ainsi la substance de traitement depuis ladite cavité interne en lui permettant de passer de ladite cavité interne et dans ledit alésage.

2. Procédé selon la revendication 1, dans lequel une capsule de substance de traitement (1 ; 101 ; 201 ; 301 ; 601 ; 901) est fournie ayant une première portion de tige (3A ; 103A ; 203A ; 603A) s'effilant vers ladite extrémité de contenant fermée (4 ; 104 ; 204 ; 604 ; 904) et dans lequel ledit bouchon (15 ; 115 ; 215 ; 415 ; 515 ; 615 ; 915) est poussé à force à travers ladite extrémité ouverte (5 ; 105 ; 205 ; 605 ; 705 ; 805) et ladite cavité, en mise en prise avec la portion de tige s'effilant, rompant ladite portion de tige par contact direct avec cette dernière.

3. Procédé selon la revendication 1 ou 2, dans lequel ledit au moins un alésage (34 ; 34' ; 34") est formé dans ledit élément poreux (30 ; 30' ; 30") ayant une profondeur (D) essentiellement plus grande qu'une longueur axiale (L) de la tige (3 ; 103 ; 203 ; 603 ; 703 ; 803 ; 903) de la capsule (1 ; 101 ; 201 ; 301 ; 601 ; 901) depuis ladite extrémité fermée (4 ; 104 ; 204 ; 604 ; 904) vers ladite extrémité ouverte (5 ; 105 ; 205 ; 605 ; 705 ; 805).

4. Procédé selon l'une quelconque des revendications 1 à 3, dans lequel ladite force d'entraînement (F) est appliquée audit bouchon (615) par une manipulation rotative de ce dernier et par la mise en prise mutuelle entre des filetages externe et interne (616 ; 609) sur le bouchon et le contenant (602), respectivement.

5. Procédé selon l'une quelconque des revendications 1 à 4, dans lequel plusieurs substances de traitement différentes (20 ; 21) sont simultanément libérées depuis des compartiments séparés (208A-B ; 308A-C ; 308A'-D') de ladite cavité interne (208 ; 308 ; 308') par l'entraînement dudit bouchon (215) dans la cavité.

6. Capsule (1 ; 101 ; 201 ; 301 ; 601 ; 901) pour insertion dans un alésage (34 ; 34' ; 34") d'un élément poreux (30 ; 30' ; 30") afin d'appliquer une substance de traitement (20 ; 21) à l'intérieur de l'élément, ladite capsule comprenant :
- un contenant (2 ; 102 ; 202 ; 302 ; 602 ; 702 ; 802 ; 902) ayant une extrémité fermée (4 ; 104 ; 204 ; 604 ; 904), une extrémité ouverte (5 ; 105 ; 205 ; 605 ; 705 ; 805) et une tige (3 ; 103 ; 203 ; 603 ; 703 ; 803 ; 903) interconnectant lesdites extrémités fermée et ouverte, et ayant une cavité interne (8 ; 208 ; 308 ; 308' ; 608 ; 908) permettant d'y recevoir une substance de traitement,
- un bouchon (15 ; 115 ; 215 ; 415 ; 515 ; 615 ; 915) pour insertion dans l'extrémité ouverte de ladite capsule, ledit bouchon dans un état assemblé fermant ladite extrémité ouverte et retenant ladite substance de traitement dans ladite cavité interne ; **caractérisé par**
- une bride d'arrêt externe (6 ; 106 ; 206 ; 606 ; 706 ; 806) au niveau de ladite extrémité ouverte, afin de buter contre une paroi externe (32 ; 31") dudit élément lorsqu'elle est insérée dans ledit alésage.

7. Capsule (1 ; 101 ; 201 ; 301 ; 601 ; 901) selon la revendication 6, dans laquelle une première portion (3A ; 103A ; 203A ; 603A) de la tige (3 ; 103 ; 203 ; 603 ; 703 ; 803 ; 903) est effilée vers ladite extrémité fermée (4 ; 104 ; 204 ; 604 ; 904) et est fabriquée à partir d'un matériau cassant et/ou alternativement dans laquelle sont formées des entailles d'amorçage de fissures (7) pour permettre audit bouchon (15 ; 115 ; 215 ; 415 ; 515 ; 615 ; 915) d'être poussé à force à travers ladite extrémité ouverte (5 ; 105 ; 205 ; 605 ; 705 ; 805) et ladite cavité (8 ; 208 ; 308 ; 308' ; 608 ; 908), en mise en prise avec la première portion de tige s'effilant, rompant ladite portion de tige par contact direct avec cette dernière.

8. Capsule (1 ; 101 ; 201 ; 301 ; 601 ; 901) selon la revendication 6 ou 7, dans lequel des moyens d'attache (16, 9 ; 111 ; 416 ; 616 ; 609) sont disposés sur la circonférence externe du bouchon (15 ; 115 ; 415 ; 615 ; 915) et sur la circonférence interne d'une seconde portion de tige généralement cylindrique (3B ; 103B ; 203B ; 603B), respectivement, afin de retenir de façon libérable lesdits bouchon (15 ; 115 ; 415 ; 615 ; 915) et contenant (2 ; 102 ; 602 ; 702 ; 802 ; 902) dans un état assemblé mutuellement scellé.

9. Capsule (201) selon l'une quelconque des revendications 6 à 8, dans laquelle le contenant (202 ; 302 ; 302') comprend des parois de séparation internes (212 ; 312 ; 312') divisant la cavité interne (208 ; 308 ; 308') en plusieurs sous-chambres (208A-B ; 308A-C ; 308A'-D') contenant chacune une substance de traitement séparée (20 ; 21) dans l'état assemblé.

10. Capsule (1 ; 101 ; 201 ; 301 ; 601 ; 901) selon l'une quelconque des revendications 6 à 9, dans laquelle ladite extrémité fermée (4 ; 104 ; 204 ; 604 ; 904) du contenant (2 ; 102 ; 202 ; 302 ; 602 ; 702 ; 802 ; 902) comprend une paroi inférieure qui est (110 ; 10:1 ; 10:2 ; 10:3 ; 10:4 ; 910) attachée de façon libérable à la tige (3 ; 103 ; 203 ; 603 : 903) au niveau de ladite extrémité fermée (4 ; 104 ; 204 ; 604 ; 904) ou qui est (10 ; 10:5) alternativement formée solidairement avec la première portion de tige effilée (3A ; 103A ; 203A ; 603A).

11. Capsule (901) selon l'une quelconque des revendications 6 à 9, dans laquelle, dans son état assemblé, une barre centrale (914) s'étend le long d'une portion importante de la cavité (908) et est formée solidairement avec ou attachée à soit une paroi inférieure (910) au niveau de ladite extrémité fermée (904) du contenant (902), soit au bouchon (915).
